# FASCICULE DE BREVET EUROPEEN

(11) **EP 2 476 162 B1**
(45) Date de publication et mention de la délivrance du brevet: **06.11.2013**
(21) Numéro de dépôt: 10770551.9
(22) Date de dépôt: 10.09.2010
(51) Int. Cl.: H01Q 1/28, H01Q 1/42, B64C 1/36

(54) **RADÔME ET DISPOSITIF DE FIXATION DE CE RADÔME À UN AÉRONEF**
RADOM UND BEFESTIGUNGSVORRICHTUNG AUF EIN LUFTFAHRZEUG
RADOME AND FASTENING DEVICE FOR THIS RADOM ON AN AIRCRAFT

(30) Priorité: 11.09.2009 FR 0956267
(43) Date de publication de la demande: 18.07.2012
(73) Titulaire: Airbus Operations (S.A.S.), 31060 Toulouse (FR)
(72) Inventeur: DAZET, Francis, F-65220 Tournous-Darre (FR)
(74) Mandataire: Cornuejols, Christophe
(86) Numéro de dépôt international: PCT/FR2010/051896
(87) Numéro de publication internationale: WO 2011/030078

(56) Documents cités:
- EP-A1- 1 612 139
- WO-A1-98/27800
- US-A- 5 820 077

## Description

L'invention concerne un radôme pour aéronef et plus particulièrement un dispositif de fixation dudit radôme à la structure de cet aéronef.

La plupart des aéronefs et plus particulièrement les avions de transport civil comprennent un radôme situé en pointe avant du fuselage. Outre son rôle aérodynamique, ce radôme protège également un radar. De ce fait il est constitué d'un matériau perméable aux ondes électromagnétiques, en général un matériau composite. Les fonctions de cette pièce impliquent plusieurs contraintes quant à sa conception et à sa réalisation :
- l'accessibilité au radar situé sous le radôme implique que celui-ci soit une pièce amovible et avantageusement facilement démontable ou escamotable ;
- son rôle de protection du radar et sa position dans une zone particulièrement exposée à différents types impacts, impose que cette pièce soit particulièrement résistante, mais aussi qu'elle soit étanche, tout comme sa liaison au fuselage ;
- sa position aérodynamique en pointe avant implique qu'elle se raccorde parfaitement à la forme du fuselage pour éviter toute formation de turbulences dans l'écoulement de l'air, consécutives à un mauvais affleurement.

Ces exigences sont contradictoires à plus d'un titre. Par exemple, la perméabilité magnétique encourage la réalisation en matériau composite. Or, la complexité de la forme et la définition des plis structuraux adaptés à la contrainte de résistance aux impacts conduisent à des déformations complexes de l'ensemble après cuisson et des difficultés d'ajustement de la forme du radôme à celle du fuselage. Cet ajustement est d'autant plus complexe que l'on est en présence de formes en double courbure et de pièces très rigides.

Selon l'art antérieur, essentiellement deux méthodes de compromis entre ces différentes exigences sont utilisées. La première, consiste à intégrer au radôme, au niveau de l'interface avec le fuselage, un cadre rigide et métallique dont la forme est réalisée avec précision et s'ajuste à la forme de l'interface côté fuselage. Cette configuration est coûteuse, compte tenu de la précision de réalisation, et la présence de la pièce métallique produit un effet défavorable sur la masse. Cependant, la rigidité de cette zone périphérique permet l'installation de mécanismes d'ouverture dont la cinématique facilite un accès rapide au radar sans dépose du radôme.

Une autre solution, décrite dans le brevet européen EP1612139 au nom de la demanderesse, consiste à réaliser une interface de montage souple, sans pièce rigide, liée au fuselage par une pluralité de fixations réparties sur la circonférence. Cette configuration permet de profiter de la souplesse de l'interface pour l'adapter à la forme du fuselage par la pluralité de fixations. En contrepartie, le temps de démontage et/ou d'ouverture du radôme est accru par rapport à la première solution du fait de la pluralité de liaisons à défaire et à rétablir à chaque ouverture-fermeture du radôme. Ces fixations sont placées en très grand nombre notamment pour compenser la souplesse du radôme à l'interface entre celui-ci et l'extrémité du fuselage.

Le document WO 98/27800 décrit un Radôme selon l'art antérieur.

L'invention vise à résoudre les insuffisances de l'art antérieur en proposant un radôme dont la constitution et le dispositif de montage/ouverture coopèrent afin d'assurer une qualité d'ajustement et d'affleurement améliorée avec le fuselage, en préservant une possibilité d'ouverture ou de démontage rapide sans désavantage en termes de masse.

À cette fin l'invention propose un radôme pour un aéronef lequel radôme comprend une pluralité de boîtiers de verrouillage aptes à rapprocher les faces en vis-à-vis du fuselage de l'aéronef et du radôme, chaque boîtier comportant :
- des moyens de verrouillage aptes à exercer sur la face du fuselage un effort de traction sensiblement normal à celle-ci par l'intermédiaire de moyens d'accrochage ;
- des moyens de centrage aptes à reprendre les efforts de cisaillement sensiblement tangents aux faces du fuselage et du radôme en vis-à-vis ;
- les moyens de verrouillage étant placés de telle manière qu'ils se trouvent à l'intérieur du cône des efforts résultants sur les moyens de centrage de sorte à minimiser les sollicitations de flexion générées par l'assemblage dans le radôme.

Ainsi, en minimisant les sollicitations de flexion dans le radôme et notamment à l'interface entre le radôme et le fuselage, le radôme peut être souple pour s'adapter à la forme du fuselage dans un affleurement parfait et le nombre de boîtiers de verrouillage peut être réduit afin de ne pas augmenter exagérément les temps de montage-démontage dudit radôme.

L'invention peut être mise en oeuvre selon les modes de réalisation avantageux exposés ci-après, lesquels peuvent être considérés individuellement ou selon toute combinaison techniquement opérante.

Avantageusement le radôme objet de l'invention comprend une fente longitudinale dans sa structure partant de l'extrémité d'interface avec le fuselage.

Ainsi la souplesse de l'interface peut être augmentée.

Selon un mode réalisation particulièrement avantageux le radôme comprend une pluralité de fentes longitudinales dans sa structure partant de l'extrémité de l'interface avec le fuselage e réparties sur la circonférence de cette extrémité les boîtiers de verrouillage comprenant chacun une surface d'appui rigide fixée au radôme et enjambant les deux bords d'une fente

Ainsi la présence de ces fentes permet conférer de la souplesse à la fois en forme et en périmètre à l'extrémité du radôme faisant interface avec le fuselage et ainsi d'obtenir un ajustement et un affleurement parfait des deux structures même si l'extrémité d'interface dudit radôme.

Le nombre de fentes est déterminé par la capacité à permettre une adaptation à la fois en forme et en périmètre de l'extrémité d'interface avec le fuselage en fonction de la forme, de la nature et de la rigidité de cette extrémité. En pratique il est fixé par des simulations numériques associées si besoin à des essais sur prototype.

Les boîtiers de verrouillage, dont une surface enjambe les bords desdites fentes, font office de ferrures et permettent d'assurer la continuité structurale de l'interface et de drainer les flux d'efforts sans passer par lesdites fentes une fois que l'interface est ajustée. La combinaison de ce rôle structural avec la fonction de verrouillage permet de limiter la masse qui serait ajoutée par des ferrures de reprise d'effort spécifique en présence des fentes.

Avantageusement, le radôme objet de l'invention comprend, en partant de l'extrémité d'interface avec le fuselage, une zone périphérique monolithique se prolongeant sous chaque boîtier de verrouillage le reste du radôme étant constituée d'une structure en nid-d'abeilles. Cette zone monolithique, avantageusement cocuite avec le reste de la structure, confère à l'extrémité du radôme de la rigidité, autorisant ainsi son maintien par un nombre limité de points d'ancrage et des possibilités d'ouverture ou d'escamotage simplifiées, notamment par des articulations. Contrairement à l'art antérieur cette zone périphérique rigide n'est pas réalisée avec une précision particulière et peut être ajustée au fuselage grâce à la présence des fentes, ce qui autorise sa réalisation de manière économique.

Cette zone périphérique rigidifiée peut être avantageusement utilisée pour y intégrer les fonctions d'étanchéité du radôme, notamment en y pratiquant une rainure recevant l'extrémité d'un joint déformable fixé au fuselage. L'intégration des moyens assurant cette fonction d'étanchéité dans l'épaisseur de la paroi du radôme permet de rapprocher radialement les moyens de verrouillage de ladite paroi et ainsi de limiter les effets de flexion et de cisaillement parasites occasionnés par la distance entre les points d'application des efforts sur ces moyens de verrouillage et la paroi du radôme à laquelle ils sont fixés.

Avantageusement, les moyens de centrage sont constitués par des centreurs qui viennent se loger dans des réceptacles côté fuselage lors de la fermeture dudit radôme. Outre l'avantage de faciliter un positionnement reproductible du radôme lors de chaque opération d'ouverture fermeture de celui-ci, ces centreurs reprennent les sollicitations de cisaillement sensiblement parallèles au plan d'interface.

Ainsi, dans la mesure où les verrous n'assurent pas non plus de fonction de positionnement lesdits verrous peuvent être choisis de type « à verrouillage rapide » connus de l'art antérieur, notamment à crochet de traction et qui permettent le verrouillage et le déverrouillage par une seule manoeuvre d'un levier affleurant la surface externe du radôme. Ainsi ils peuvent être déverrouillés depuis l'extérieur du radôme permettant ainsi un accès facile au radar dans un temps d'immobilisation réduit. Ce type de verrou présente une résistance élevée dans l'axe de verrouillage mais réduite perpendiculairement à cet axe, résistance réduite compensée par la présence des centreurs.

Avantageusement les boîtiers de verrouillage sont utilisés pour supporter lesdits centreurs, ce qui procure un avantage en termes de masse en limitant le nombre de pièces, mais surtout permet de rapprocher lesdits centreurs des points d'accrochage des dispositifs de verrouillage facilitant ainsi l'arc-boutement du dispositif de verrouillage et par suite la sûreté dudit verrouillage.

Avantageusement au moins deux boîtiers de verrouillage comprennent un dispositif de prépositionnement du radôme par rapport au fuselage constitués par une broche venant se loger dans une rondelle en élastomère. Ces dispositifs facilitent le montage du radôme. Les rondelles en élastomères assurent une localisation et un maintien relatif du radôme par rapport au fuselage avant de positionner et fixer celui-ci de manière sécurisée par l'intermédiaire des centreurs sur le fuselage. L'intégration de ce dispositif aux boîtiers de verrouillage permet un gain de masse en limitant le nombre de ferrures installées sur le radôme. Lesdits boîtiers peuvent soit recevoir les broches de prépositionnement soit les rondelles en élastomère, et cette configuration peut changer d'un boîtier à l'autre. Si les dimensions ou le poids du radôme le justifient, quatre broches de prépositionnement de ce type sont utilisées.

Avantageusement, au moins deux broches ont une forme apte à permettre l'articulation du radôme selon un axe sensiblement parallèle au plan d'interface. Lorsque le radôme ne comprend que deux broches de prépositionnement celles-ci seront préférentiellement de ce type. Elles servent ainsi de charnières pour une ouverture rapide du radôme sans dépose de celui-ci. La légèreté du radôme selon l'invention permet de réaliser cette articulation dans les rondelles en élastomère sans installer de ferrure et de chape pour la reprise d'une telle articulation. Lesdites broches étant connectées aux boîtiers, rigides, eux-mêmes fixés à la zone périphérique monolithique également rigide, ces deux points d'accroche suffisent à maintenir le radôme en position ouverte sans risque de dégradation de celui-ci sous l'effet de son propre poids.

L'invention concerne également un aéronef comprenant un radôme correspondant à l'un quelconque des modes de réalisation exposés ci-avant.

L'invention sera maintenant plus précisément décrite dans le cadre de ses modes de réalisation préférés, nullement limitatifs, représentés sur les figures 1 à 11, dans lesquelles :
- la figure 1 représente une vue d'ensemble de profil du radôme selon l'invention ;
- la figure 2 montre le radôme selon l'invention vue de face en perspective ;
- la figure 3 est une vue de détail de dessus du dispositif de connexion du radôme à la structure de l'aéronef ;
- la figure 4 est une vue en coupe selon un plan radial du radôme mettant en évidence le dispositif de verrouillage ;
- la figure 5 est une vue de détail de face et de profil des ferrures réceptacles fixées à l'interface de connexion côté aéronef ;
- la figure 6 est une vue en coupe des centreurs sphériques du radôme ;
- les figures 7 et 8 illustrent en coupe deux modes de réalisation du dispositif d'étanchéité de la périphérie du radôme à son extrémité d'interface avec la structure de l'aéronef ;
- les figures 9 et 10 illustrent en coupe selon un plan radial deux modes de réalisation du dispositif de précentrage du radôme lors de son assemblage avec la structure de l'aéronef
- la figure 11 représente un mode particulier de réalisation des broches du dispositif de précentrage pour une utilisation desdites broches en tant que charnières d'ouverture du radôme.

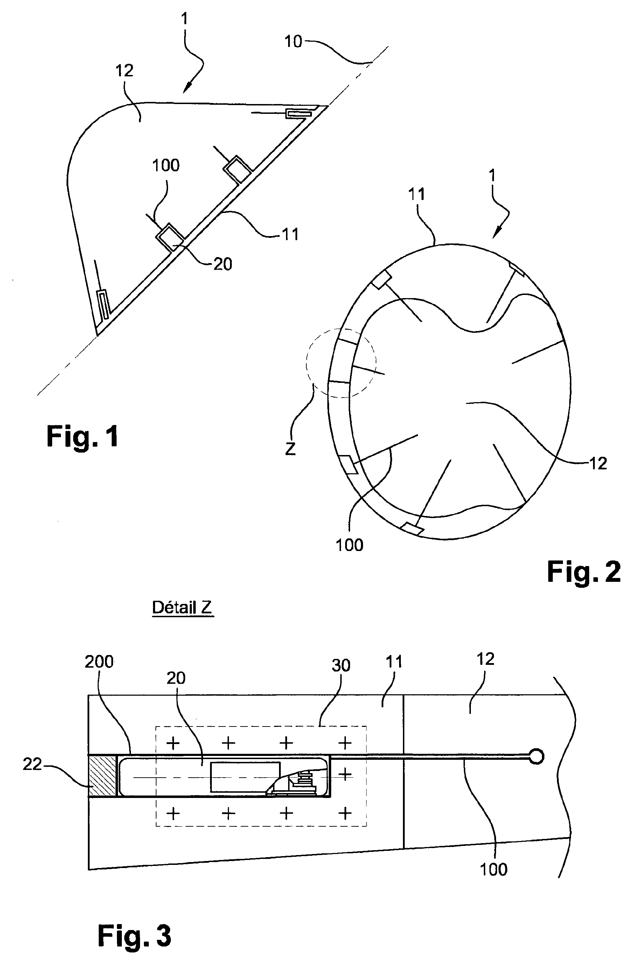

Figures 1 et 2, le radôme selon l'invention (1) comprend une surface en double courbure (12) réalisée dans un matériau perméable aux ondes électromagnétiques, de préférence composite sous forme d'un nid-d'abeilles. Depuis l'extrémité d'interface (10) laquelle est fixée au fuselage de l'aéronef, il comprend une couronne monolithique rigide (11) s'étendant aux emplacements des dispositifs de verrouillage (20). Cette couronne monolithique rigide maintient la cohérence de forme dudit radôme notamment lors de l'ouverture de celui-ci par exemple au cours d'opérations de vérification ou de maintenance du radar placé sous le radôme.

La rigidité de cette couronne (11) permet aussi de maintenir le radôme fixé au fuselage par un nombre réduit de points d'ancrage et de verrouillage au fuselage. En contrepartie, la rigidité de ladite couronne ne permet pas un ajustement et un affleurement parfaits de la forme de l'extrémité d'interface (10) à la forme du fuselage. Afin de permettre l'adaptation en forme et en périmètre de la couronne d'interface du radôme au fuselage de l'aéronef, des fentes (100) sont pratiquées dans la structure du radôme, partant de l'extrémité d'interface (10) et se prolongeant dans la couronne monolithique (11) et au-delà. Lesdites fentes (100) sont sensiblement perpendiculaires à l'interface d'assemblage, elles permettent ainsi d'ajuster celle-ci tant en forme qu'en périmètre.

Figure 3, les fentes (100) comprennent deux parties. Une première partie (200) sensiblement rectangulaire et apte à recevoir un verrou (20) préférentiellement de type sauterelle à grenouillère, s'étend depuis l'extrémité d'interface, sur une longueur apte à permettre le logement du dispositif de verrouillage adapté. Cette encoche (200) est prolongée par une fente étroite (100).

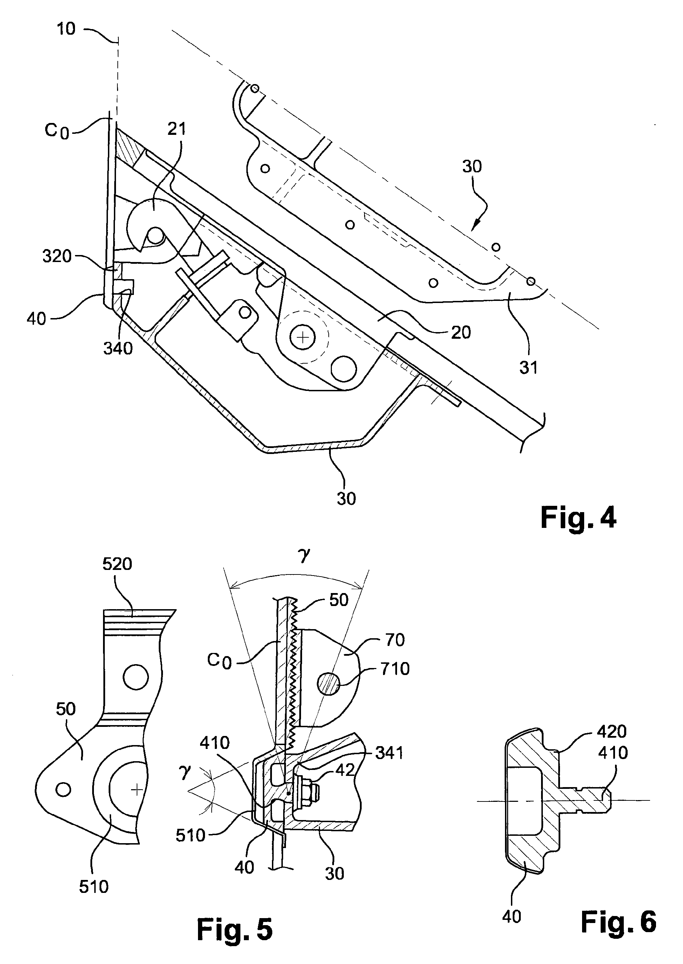

L'ajustement du radôme au fuselage en forme et en périmètre peut être réalisé directement sur l'aéronef auquel ledit radôme est destiné ou sur un gabarit. Avantageusement, il est possible d'utiliser un gabarit femelle sur lequel on plaque la face extérieure du radôme (1) au niveau de la couronne monolithique (11). Les fentes donnent suffisamment de souplesse pour effectuer le calibrage en contrôlant le portage de ladite couronne sur le gabarit selon tout son périmètre. Après calibrage les boîtiers de verrouillage (30), figures 3 et 4, sont fixés sur la face interne du radôme au droit des fentes.

Figure 4, les boîtiers de verrouillage comprennent une semelle (31) de largeur suffisante pour enjamber l'encoche (200) de placement du verrou et la fente (100). Une fois les boîtiers fixés, ils rigidifient la couronne (11) dans le sens annulaire et annulent la souplesse procurée par les fentes et les encoches. Le radôme reste donc à la forme du gabarit.

Le radôme est alors extrait du gabarit, les verrous (20) sont installés dans leurs emplacements. Une cale (22) collée et résinée est placée devant chaque verrou afin de fermer l'encoche (200), les fentes (100) sont bouchées avec un mastic à base de polysulfures ou par une résine époxyde chargée de fibres courtes.

La semelle (31) des boîtiers de verrouillage enjambant les fentes (200,100) une fois lesdits boîtiers fixés au radôme, les flux d'effort circonférentiels et longitudinaux passent par lesdits boîtiers sans solliciter les fentes (200,100). Les boîtiers (30) sont conçus de sorte à résister à ces flux d'effort. Afin de favoriser ce transfert de charge, la partie monolithique (11), en extrémité d'interface du radôme, est de préférence prolongée sous les semelles des boîtiers de verrouillage (31). Pour chaque boîtier de verrouillage la portée de la semelle sur le radôme est ajustée par un calage de compensation en interposant de la résine entre la semelle du boîtier et sa surface d'appui sur le radôme.

Avantageusement les boîtiers de verrouillage sont constitués d'un alliage d'aluminium à haute performance choisi dans la série 7000 et sont obtenus par usinage. Selon cet exemple de réalisation, les boîtiers de verrouillage se présentent sous la forme d'éléments sensiblement prismatiques creux occupant un volume de l'ordre de 500x300x300 mm³. L'épaisseur typique de la paroi desdits boîtiers est comprise entre 1,5 mm et 2,5 mm. La rigidité annulaire et longitudinale de tels boîtiers participe à la tenue structurale du radôme, renforçant les points d'ancrage avec la structure de l'aéronef et permettant ainsi de réduire le nombre de ces points d'ancrage. Typiquement le nombre d'ancrages de ce type peut être réduit à 8 pour le radôme d'un avion gros porteur dont le diamètre de l'extrémité d'interface est de l'ordre de 2 mètres.

Figure 4, la rigidité des boîtiers est avantageusement utilisée pour regrouper sur ces éléments l'ensemble des fonctions de centrage et de verrouillage du radôme sur la structure de l'aéronef.

Selon un mode de réalisation avantageux, le radôme est connecté à l'aéronef par des centreurs sphériques (40) et des crochets de verrouillage (21). Les deux sont connectés à la structure de l'aéronef de préférence par l'intermédiaire de ferrures réceptacles (50) comprenant chacune un réceptacle conique (510), d'une conicité d'angle γ/2, destiné à recevoir la sphère de centrage (40) du boîtier de verrouillage en vis à vis, et une zone striée (520) recevant les ferrures de liaison des crochets (51). Les ferrures réceptacles (50) sont par exemple réalisées en titane T40 et fixées à la structure de l'aéronef par des vis également en titane.

Les centreurs sphériques sont de préférence constitués d'un matériau à base de bronze malléable comprenant du cuivre, de l'étain et du plomb présentant un faible coefficient de frottement avec le titane et apte à supporter des charges statiques. Le diamètre typique de la partie sphérique des centreurs (40) est compris entre 14 et 20 mm.

Ils sont fixés aux extrémités des boîtiers (30) par boulonnage. À cette fin, figure 6, la partie sphérique des centreurs est prolongée par un axe fileté (410), de sorte à former un épaulement (420) avec la partie sphérique du centreur. L'axe (410) est ajusté dans un alésage (340) à l'extrémité du boîtier de verrouillage (30) du côté de l'interface avec la structure de l'aéronef, et sécurisé en position par un écrou (42) vissé sur l'extrémité de cet axe. L'épaulement (420) du centreur vient en appui sur la face avant (320) du boîtier de verrouillage (30). Cette face avant (320) est parallèle au plan d'assemblage (10) du radôme et idéalement comprise dans ce plan.

La ferrure (70) de liaison du crochet est connectée à la ferrure réceptacle (50) par l'intermédiaire d'une interface striée (520) qui permet de régler la distance radiale de l'axe d'accrochage (710) par rapport à l'axe longitudinal du radôme. Avantageusement, le point d'accrochage du crochet est placé radialement le plus proche possible de la surface du radôme. Selon la direction longitudinale l'axe d'accrochage (710) est placé le plus proche possible du plan d'appui (320) des centreurs sur la face avant des boîtiers (30). Idéalement, la position longitudinale de l'axe d'accrochage se trouve, pour un boîtier donné, dans le cône de direction de la résultante des efforts sur la sphère de centrage, figure 5. Le sommet de ce cône d'angle y est placé sur l'intersection de l'axe longitudinal de la sphère avec le plan d'appui (320) de celle-ci sur le boîtier. Ces principes de positionnement permettent de réduire les couples de flexion dans la structure du radôme et ainsi de réduire la masse des dispositifs d'accrochage. D'un point de vue pratique, cette condition est respectée si la distance longitudinale entre le plan (320) d'appui des sphères sur le boîtier de verrouillage et l'axe (710) de réception du crochet est inférieure à 30 mm.

Les sphères (50) assurent le positionnement radial et la transmission des efforts radiaux et annulaires entre la structure de l'aéronef et le radôme. Les verrous (20), par l'intermédiaire des crochets, assurent l'accrochage longitudinal et compriment l'interface entre le radôme et la structure de l'aéronef pour en assurer l'étanchéité et la continuité aérodynamique. Rapprocher longitudinalement l'axe d'accrochage (710) des crochets et le plan d'appui (320) des sphères sur les boîtiers permet d'obtenir l'arc-boutement des sphères dans leur logement lorsque l'action des crochets s'exerce. Les centreurs contribuent ainsi également au maintien axial du radôme lorsque les crochets de verrouillage appliquent leur traction.

Ainsi les différents moyens coopèrent pour permettre une ouverture facile et rapide du radôme tout en assurant un affleurement parfait de celui-ci avec la structure de l'aéronef. En effet, le centrage du radôme par rapport à la structure de l'aéronef est assuré par l'adaptabilité de sa forme, procurée par les fentes (200,100). Ainsi, les centreurs (40) peuvent être montés dans des réceptacles ajustables (510) et par conséquent être montés sans jeu. Ils peuvent donc reprendre efficacement les efforts de cisaillement à l'interface avec l'aéronef et autorisent ainsi la connexion du radôme au fuselage dudit aéronef par une série de verrous à crochet de traction, rapidement et facilement manoeuvrables.

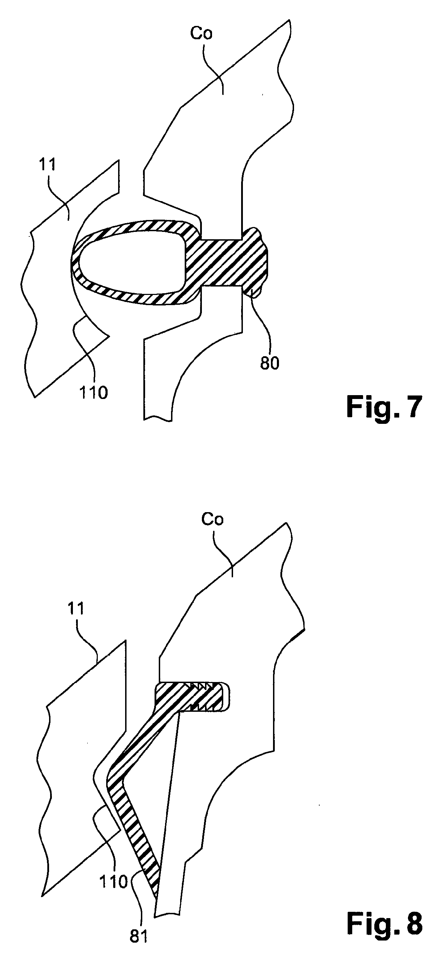

Figures 7 et 8, un joint (80, 81) est placé sur la périphérie de l'interface entre la structure de l'aéronef et l'extrémité d'interface du radôme. Préférentiellement le joint est fixé à la structure de l'aéronef (C0) par encliquetage dans une rainure ou dans des trous pratiqués à cet effet dans ladite structure. L'autre extrémité du joint (80,81) se loge dans une rainure (110) réalisée perpendiculairement au plan d'interface (10) dans la partie monolithique (11) de l'extrémité du radôme. L'action des verrous (20) en rapprochant longitudinalement l'extrémité du radôme de la structure de l'aéronef écrase le joint dans la rainure, assurant ainsi l'étanchéité de la périphérie du radôme, le joint étant par ailleurs protégé dans la rainure (110).

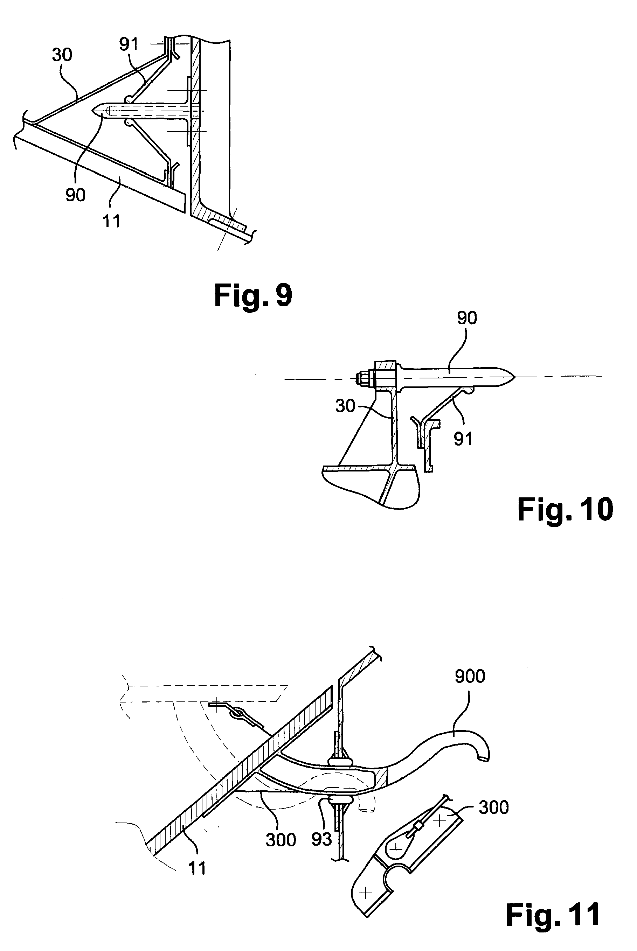

Figures 9 et 10, l'installation du radôme (1) sur la structure de l'aéronef est facilitée par des dispositifs de précentrage. Ces dispositifs de précentrage comprennent chacun une broche (90) et une rondelle en élastomère (91) comportant un alésage central apte à recevoir ladite broche (90) et présentant une flexibilité radiale suffisante pour supporter un léger décentrement en position en orientation de la broche (90) par rapport à cet alésage. Les broches de précentrage (90) peuvent être installées sur la structure de l'aéronef et les rondelles en élastomère (91) sur les boîtiers de verrouillage, figure 9. Alternativement, figure 10, la broche de précentrage (90) est fixée au boîtier de verrouillage (30) et la rondelle en élastomère (91) à la structure de l'aéronef. La longueur et la position des broches (90) et des rondelles en élastomère (91) est telle que les broches pénètrent dans les rondelles avant que les centreurs sphériques ne pénètrent dans leurs réceptacles. Avantageusement au moins 4 dispositifs de précentrage de ce type sont disposés et répartis sur la circonférence du radôme à l'extrémité d'interface.

Figure 11, selon un mode de réalisation avantageux, deux des broches de précentrage (900) situées de préférence sur la partie supérieure du radôme présentent une forme en crochet et sont fixées à la semelle du boîtier de verrouillage (300) correspondant. Ces broches particulières se centrent dans des rondelles en élastomère (93) présentant une élasticité radiale réduite par rapport à celles (91) recevant les autres broches de précentrage (90). La forme particulière de ces broches (900) permet de les utiliser comme des charnières pour l'ouverture du radôme, qui peut ainsi être ouvert pour accéder au radar sans qu'il ne soit nécessaire de le déposer.

La description ci-avant illustre clairement que par ses différentes caractéristiques et leurs avantages, la présente invention atteint les objectifs qu'elle s'était fixés. En particulier, l'invention permet la réalisation d'u radôme offrant une qualité d'ajustement et d'affleurement améliorée avec le fuselage, en préservant une possibilité d'ouverture ou de démontage rapide sans désavantage en termes de masse

## Revendications

1. Radôme (1) comportant une extrémité d'interface destinée à être assemblée à un fuselage d'un aéronef muni de moyens d'accrochage, **caractérisé en ce qu'**il comprend une structure munie d'une pluralité de fentes (200, 100) longitudinales partant de l'extrémité d'interface avec le fuselage et réparties sur la circonférence de cette extrémité d'interface et une pluralité de boîtiers de verrouillage (30) configurés pour rapprocher les faces en vis-à-vis du fuselage de l'aéronef et du radôme (1), chaque boîtier (30) comportant :
- des moyens de verrouillage (20, 21, 70, 710) configurés pour exercer sur la face du fuselage un effort de traction sensiblement normal à ladite face par l'intermédiaire desdits moyens d'accrochage ;
- des moyens de centrage (40, 510) configurés pour reprendre les efforts de cisaillement sensiblement tangents aux faces du fuselage et du radôme en vis-à-vis ;
- les moyens de verrouillage (20, 21, 70, 710) étant placés à l'intérieur du cône des efforts résultants sur les moyens de centrage (40, 510) de sorte à minimiser les sollicitations de flexion générées par l'assemblage dans le radôme (1).

2. Radôme selon la revendication 1, dans lequel les boîtiers de verrouillage (30) comprennent chacun une surface d'appui rigide fixée au radôme et enjambent les deux bords d'une fente.

3. Radôme selon l'une des revendications 1 ou 2, qui comprend, en partant de l'extrémité d'interface avec le fuselage (10), une zone périphérique monolithique (11) se prolongeant sous chaque boîtier de verrouillage (30), le reste du radôme (12) étant constitué d'une structure en nid-d'abeilles.

4. Radôme selon l'une des revendications 1 à 3, **caractérisé en ce que** la zone périphérique (11) comprend, dans le plan de l'extrémité d'interface (10), une rainure (110) configurée pour recevoir l'extrémité d'un joint déformable (80,81) fixé au fuselage.

5. Radôme selon l'une des revendications 1 à 4, **caractérisé en ce que** les moyens de centrage sont constitués par des centreurs (40) placés dans un plan comprenant l'interface avec le fuselage et venant se loger dans un réceptacle (510) lié au fuselage, lorsque ledit radôme est en position fermée.

6. Radôme selon l'une des revendications 1 à 5, **caractérisé en ce que** les moyens de verrouillage sont constitués par un dispositif de verrouillage (20) à crochet (21) lequel exerce en position verrouillée un effort sur un axe (710) lié au fuselage.

7. Radôme selon la revendication 6, **caractérisé en ce que** le point de liaison (710) du crochet avec le fuselage et le point d'appui (410) du centreur sur le boîtier de verrouillage sont distants selon l'axe longitudinal du fuselage d'une valeur inférieure ou égale à 30 mm.

8. Radôme selon l'une quelconque des revendications précédentes, **caractérisé en ce qu'**au moins deux boîtiers de verrouillage comprennent un dispositif de pré-positionnement du radôme par rapport au fuselage sous la forme d'une broche (90) venant se loger dans une rondelle en élastomère (91).

9. Radôme selon la revendication 8, **caractérisé en ce qu'**au moins deux desdites broches (900) ont une forme en crochet configuré pour permettre l'articulation du radôme selon un axe sensiblement parallèle au plan d'interface.

10. Procédé pour la réalisation d'un radôme (1) selon l'une quelconque des revendications précédentes, en matériau composite, **caractérisé en ce qu'**il comprend les étapes consistant à :
- découper les fentes (200,100) par usinage à l'extrémité d'interface dudit radôme ;
- poser l'extrémité d'interface du radôme sur un gabarit et ajuster la forme et le périmètre de l'extrémité d'interface audit gabarit ;
- fixer les boîtiers de verrouillage (30) au droit de chaque fente alors que le radôme est sur le gabarit de sorte à figer la forme de l'extrémité d'interface du radôme.

11. Procédé selon la revendication 10, **caractérisé en ce qu'**il comprend des étapes consistant à :
- mouler une structure composite (12) à la forme du radôme constituée de deux panneaux composite à matrice thermoplastique ou thermodurcissable séparés par une âme en nid-d'abeilles,
- rapporter à l'extrémité de cette structure une couronne monolithique (11).

12. Aéronef comprenant un radôme selon l'une quelconque des revendications 1 à 9.

13. Fuselage d'aéronef comportant, en son avant, une ouverture pour recevoir un radôme selon l'une des revendications 1 à 9, et, au bord de ladite ouverture, des moyens d'accrochage (50) configurés pour recevoir les moyens de verrouillage (20, 21, 70, 710) des boîtiers du radôme.

## Patentansprüche

1. Radom (1), das ein Endstück einer Verbindungsstelle umfasst, das dazu bestimmt ist, an einem Rumpf eines Luftfahrzeugs montiert zu werden, der mit Befestigungseinrichtungen versehen ist, **dadurch gekennzeichnet, dass** es eine Struktur umfasst, die mit mehreren Längsschlitzen (200, 100) versehen ist, die vom Endstück der Verbindungsstelle mit dem Rumpf ausgehen, und sich über den Umfang dieses Endstücks der Verbindungsstelle verteilen, und eine Vielzahl von Verriegelungsgehäusen (30), die konfiguriert sind, um die Flächen des Luftfahrzeugrumpfes und des Radoms (1) jeweils gegenüber anzunähern, wobei jedes Gehäuse (30) folgendes umfasst:
- Verriegelungsmittel (20, 21, 70, 710), die konfiguriert sind, um eine Zugbeanspruchung auf die Fläche des Rumpfes auszuüben, die über die besagten Befestigungseinrichtungen in etwa normal zur besagten Fläche verläuft;
- Zentriermittel (40, 510), die konfiguriert sind, um die Scherkräfte aufzunehmen, die jeweils gegenüber in etwa an den Flächen des Rumpfes und des Radoms anliegend auftreten;
- wobei die Verriegelungsmittel (20, 21, 70, 710) so innerhalb des Konus der auf die Zentriermittel (40, 510) wirkenden resultierenden Kräfte platziert sind, dass die Biegebeanspruchungen minimiert werden, die durch die Montage im Radom (1) generiert werden.

2. Radom nach Anspruch 1, in dem die Verriegelungsgehäuse (30) jeweils eine steife Auflagefläche umfassen, die am Radom befestigt ist, und die beiden Ränder eines Schlitzes überspannen.

3. Radom nach einem der Ansprüche 1 oder 2, das ausgehend vom Endstück der Verbindungsstelle mit dem Rumpf (10) eine monolithische Umgebungszone (11) umfasst, die sich unter jedem Verriegelungsgehäuse (30) ausdehnt, wobei der Rest des Radoms (12) in Form einer Wabenstruktur ausgebildet ist.

4. Radom nach einem der Ansprüche 1 bis 3, **dadurch gekennzeichnet, dass** die Umgebungszone (11) auf der Ebene des Endstücks der Verbindungsstelle (10) eine Nut (110) umfasst, die konfiguriert ist, um das Endstück einer verformbaren Dichtung (80, 81) aufzunehmen, die am Rumpf befestigt ist.

5. Radom nach einem der Ansprüche 1 bis 4, **dadurch gekennzeichnet, dass** die Zentriermittel durch Zentrierer (40) gebildet werden, die auf einer Ebene angeordnet sind, die die Verbindungsstelle mit dem Rumpf umfasst, und die sich in eine Aufnahme (510) einbetten, die mit dem Rumpf verbunden ist, wenn sich das besagte Radom in der geschlossenen Stellung befindet.

6. Radom nach einem der Ansprüche 1 bis 5, **dadurch gekennzeichnet, dass** die Verriegelungsmittel aus einer Verriegelungsvorrichtung (20) mit einem Haken (21) bestehen, der in der verriegelten Stellung eine Kraft auf eine Achse (710) ausübt, die mit dem Rumpf verbunden ist.

7. Radom nach Anspruch 6, **dadurch gekennzeichnet, dass** die Verbindungsstelle (710) des Hakens mit dem Rumpf und die Auflagestelle (410) des Zentrierers auf dem Verriegelungsgehäuse in einem Abstand entlang einer Längsachse des Rumpfes liegen, dessen Wert kleiner oder gleich 30 mm ist.

8. Radom nach irgendeinem der vorherigen Ansprüche, **dadurch gekennzeichnet, dass** zumindest zwei Verriegelungsgehäuse eine Vorrichtung zur Vorpositionierung des Radoms im Verhältnis zum Rumpf in Form eines Dorns (90) enthalten, der in eine Scheibe aus Elastomer (91) eingeführt wird.

9. Radom nach Anspruch 8, **dadurch gekennzeichnet, dass** zumindest zwei der besagten Dorne (900) die Form eines Hakens aufweisen, der konfiguriert ist, um die Bewegung des Radoms um eine Achse zu ermöglichen, die in etwa parallel zur Ebene der Verbindungsstelle verläuft.

10. Verfahren zur Herstellung eines Radoms (1) aus Verbundmaterial nach irgendeinem der vorherigen Ansprüche, **dadurch gekennzeichnet, dass** es die folgenden Schritte umfasst:
- Einschneiden der Schlitze (200, 100) durch die Bearbeitung am Endstück der Verbindungsstelle des besagten Radoms;
- Anbringen des Verbindungsstellenendstücks des Radoms auf einer Lehre und Anpassen der Form und des Umfangs des Verbindungsstellenendstücks an die besagte Lehre;
- Befestigen der Verriegelungsgehäuse (30) auf Höhe eines jeden Schlitzes, während sich das Radom auf der Lehre befindet, um die Form des Verbindungsstellenendstücks des Radoms definitiv festzulegen.

11. Verfahren nach Anspruch 10, **dadurch gekennzeichnet, dass** es die folgenden Schritte umfasst:
- das Gießen einer Verbundstruktur (12) in der Form des Radoms, bestehend aus zwei Verbundpaneelen mit einer thermoplastischen oder einer wärmehärtenden Matrix, die durch einen Steg aus einer Wabenstruktur getrennt sind,
- das Anbringen eines monolithischen Kranzes (11) am Endstück dieser Struktur.

12. Luftfahrzeug umfassend ein Radom nach irgendeinem der Ansprüche 1 bis 9.

13. Rumpf eines Luftfahrzeuges, der an seiner Vorderseite eine Öffnung umfasst, um ein Radom nach einem der Ansprüche 1 bis 9 aufzunehmen, wobei am Rand der besagten Öffnung Befestigungseinrichtungen (50) angeordnet sind, die konfiguriert sind, um die Verriegelungsmittel (20, 21, 70, 710) der Gehäuse des Radoms aufzunehmen.

## Claims

1. A radome (1) comprising an interface end intended to be assembled to an aircraft fuselage having catching means, **characterised in that** it includes a structure having multiple longitudinal slits (200, 100) coming from the interface end with the fuselage and returning over the circumference of this interface end and multiple locking cases (30) configured to bring the sides of the aircraft fuselage and the radome (1) opposite each other, each locking case (30) comprising:
- locking means (20, 21, 70, 710) configured to exert a traction stress on the side of the fuselage, almost normal to the said side by the intermediary of the said catching means;
- centring means (40, 510) configured to take back the cutting stresses, almost tangent to the sides of the fuselage and the radome opposite each other;
- the locking means (20, 21, 70, 710) being placed on the inside of the stress cone, resulting on the centring means (40, 510) in order to minimise the bending stresses generated by the assembly in the radome (1).

2. A radome according to the claim 1, wherein the locking cases (30) each include a stiff bearing surface fixed to the radome and span the two edges of a slit.

3. A radome according to one of the claims 1 or 2, which includes, coming from the interface end with the fuselage (10), a monolithic peripheral area (11) extending under each locking case (30), the rest of the radome (12) being made up of a honeycomb structure.

4. A radome according to one of the claims 1 to 3, **characterised in that** the peripheral area (11) includes, in the planar of the interface end (10), a groove (110) configured to receive the end of a flexible joint (80, 81) fixed to the fuselage.

5. A radome according to one of the claims 1 to 4, **characterised in that** the centring means are made up of centralisers (40) placed in a planar including the interface with the fuselage and coming to lodge itself in a container (510) connected to the fuselage, when the said radome is in a closed position.

6. A radome according to one of the claims 1 to 5, **characterised in that** the locking means are made up of a locking device (20) with a hook (21), which, in a locked position, exerts a stress on an axle (710) connected to the fuselage.

7. A radome according to the claim 6, **characterised in that** the point of contact (710) of the hook with the fuselage and the fulcrum (410) of the centraliser on the locking case are distant in accordance with the longitudinal axle of the fuselage with a value of less or equal to 30mm.

8. A radome according to one of any of the previous claims, **characterised in that** at least two locking cases include a pre-positioned device of the radome in relation to the fuselage under the form of a pin (90), coming to lodge itself in an elastomer washer (91).

9. A radome according to the claim 8, **characterised in that** at least two of the said pins (900) have a hook shape, configured to allow the articulation of the radome in accordance with an axle almost parallel to the interface planar.

10. A method for the production of a radome (1), according to one of any of the previous claims, in composite material, **characterised in that** it includes the steps, including:
- cutting out the slits (200, 100) by machining, from the interface end of the said radome;
- placing the interface end of the radome on a template and adjusting the shape and the perimeter of the interface end to the said template;
- fixing the locking cases (30) to the right of each slit while the radome is on the template so as to set the shape of the interface end of the radome.

11. A method according to the claim 10, **characterised in that** it includes the steps, including:
- moulding a composite structure (12) to the shape of the radome made up of two thermoplastic or thermo hardening matrix composite panels, separated by a honeycomb core,
- taking back a monolithic crown (11) to the end of this structure.

12. An aircraft including a radome according to any one of the claims 1 to 9.

13. An aircraft fuselage comprising, at its front, an opening to receive a radome according to one of the claims 1 to 9, and, at the edge of the said opening, catching means (50), configured to receive locking means (20, 21, 70, 710) of the cases of the radome.
